# EUROPEAN PATENT APPLICATION

(11) **EP 1 811 481 A1**
(43) Date of publication of application: **25.07.2007**
(21) Application number: 07250175.2
(22) Date of filing: 17.01.2007
(51) Int. Cl.: G09B 5/06, G09B 9/042, G09B 19/16, G06Q 50/00, G06Q 30/00

(54) **Method and system for driver style monitoring and analysing**

(30) Priority: 18.01.2006 GB 0600938
(71) Applicant: Airmax Group Plc., Verwood, Dorset, BH31 6BE (GB)
(72) Inventor: Duddle, Ashley Robert c/o Logic House, Verwood, Dorset BH31 6BE (GB); Perham, Stephen Henry c/o Logic House, Verwood, Dorset BH31 6BE (GB)
(74) Representative: Lawrence, John

(57) **Abstract**

The invention relates to a method and a system for driver style monitoring and analysing. It relates to training a driver in order to improve how safely and economically a vehicle is driven. An aspect of the invention comprises a method of training a driver of a vehicle 100 comprising monitoring the location of the vehicle whilst it is being driven by the driver, monitoring parameters associated with the vehicle whilst it is being driven by the driver, generating a driver profile 500, 800 that indicates the driving style of the driver based upon the location of the vehicle and the parameters associated with the vehicle whilst it is being driven, and providing feedback to the driver using the driver profile 500, 800.

## Description

### Field of the Invention

This invention relates to a method and a system for driver style monitoring and analysing. In particular, but not exclusively, it relates to training a driver in order to improve how safely and economically a vehicle is driven.

### Background of the Invention

It is known to monitor where and when a user drives a vehicle using a global positioning system (GPS) located in the vehicle. The route that a driver takes can be mapped out using coordinates returned by the GPS system in combination with the times at which the coordinates were recorded.

### Summary of the Invention

An aspect of the invention comprises a method of training a driver of a vehicle comprising:
monitoring the location of the vehicle whilst it is being driven by the driver;
monitoring parameters associated with the vehicle whilst it is being driven by the driver;
generating a driver profile that indicates the driving style of the driver based upon the location of the vehicle and the parameters associated with the vehicle whilst it is being driven; and
providing feedback to the driver using the driver profile.

The method can be used to train a driver by providing feedback to the driver on how well he drives and his driving style. The method may be used to improve the safety, economy (minimising fuel consumption) and how much pollution is produced when a driver drives a vehicle. Pollution may be considered in terms of exhaust emissions, and may be quantified by the amount of carbon dioxide (CO₂) in the exhaust emissions, for example.

The driving style is a description of how a vehicle is driven by a driver. The driving style can be determined by evaluating parameters associated with the vehicle, for example the revolution speed of the engine may be evaluated to determine how steadily the vehicle is being driven, the deceleration of the vehicle may be evaluated to determine how hard the driver is braking, etc.

It may be possible to use engine management systems that are already present in a vehicle to help determine the driving style with which a vehicle is being driven. Information that may be obtained from the engine management system can include, but is not limited to: revolutions per minute (RPM); speed; distance; acceleration; deceleration; fuel consumption/usage; miles per gallon (mpg); throttle position; gear ratio; idle ratio, and any faults associated with the vehicle. One, some, or all of the above parameters may be used to generate a profile of the driver.

Using data obtained from the engine management system to determine the style with which a driver drives their vehicle can help provide a fine granularity as to how safe the driver is. Improved performance monitoring can be obtained when compared with systems which simply monitor how and when a vehicle is driven.

In some embodiments, different layers of functionality can be selected to be considered when determining the driving style, and hence driver profile, for a driver. For example, one, some, or all of the parameters listed above (RPM, speed, distance, etc.) may be considered, and it may be possible for a user to select which, if any, of the parameters are used. Additional parameters may be considered, and it may be an optional feature to monitor whether or not the vehicle is driven past "hot spots" at certain times. A hot spot may be a school at opening or closing time, a public house at closing time or any other situation where a large number of people may be present at the same time, for example at the end of a football game.

Examples of a driving style can include, but are not limited to, safe, unsafe, dangerous, erratic, steady, legal, illegal, economic, uneconomic, high or low pollution producing, aware, unaware, accelerating fast, braking hard, fast, slow or any combination of the above.

Further value can be added to known systems by including information about a driver's style in combination with information on where the vehicle is driven. The additional value in relation to the style in which a vehicle is driven can be used as a driving teaching aid. It may be used to improve the driving standards of a driver as it enables a driver to receive feedback on their driving style and enables them to change their driving habits so that they are more safe on the roads and/or more economical and/or produce less pollution.

In some embodiments the driver can be rewarded or penalised depending upon how safely and/or economically they drive and how much pollution they produce. Rewarding and penalising may entail attributing a high or low score, or producing a good or bad report for the driver. Other examples of rewards can include a cash prize, a voucher for spending in a store/restaurant, a holiday, a reduction in a driver's insurance premium, a gift item, praise and/or recognition of the driver's abilities, etc. Other examples of penalties can include recognition of the bad driving by a low placing in a league table of drivers, withholding a reward mentioned above, increasing an insurance premium, etc.

The reward and penalty may be for a selection of driving characteristics or for the overall driving style. This may further encourage a driver to improve their driving habits in terms of safety for themselves and other road users, and also environmentally in terms of how much fuel they consume and the amount of harmful exhaust emissions that are generated by the engine.

If the driver drives as part of his employment duties then the method may also be of use to the driver's employers. An employer may be able to select which one of a number of drivers to use based upon their driver profiles and/or to reward employees for good driving.

The method could be useful in training for a driving test or it could actually form part of a driving test. By way of example, the driving test could form part of the standard driving test that is required for all drivers to legally drive on the public highway, or it could form part of an advanced driving test or a specialist driving test such as, for example, a driving test for the emergency services. Therefore aspects of the invention can be considered to be directed to "a method of driver training" or to "a method of improving driver safety".

A scenario can be envisaged in which a driver has been convicted of a driving offence and the method is used as an assessment as part of the driver's rehabilitation or retraining.

A further example may be to penalise drivers who drive during the rush hour on busy roads. The penalty may encourage the driver to take public transport which will produce less pollution overall and also make the roads safer as there are less cars on the roads.

It may be possible for a user to select and build up the layers of analysis that should be applied. For example a graphical user interface may be used to set up the system and a user may electronically tick boxes next to parameters that they wish to be considered for the driver profile and/or feedback.

The feedback to the driver may be the same as the driver profile; that is the driver profile itself is fed back to the driver. The driver profile may provide sufficient information to provide useful information to the driver such that the driver can improve their driving style based upon the driver profile alone.

In some embodiments the feedback may be a report giving the driver performance ratings for various categories. The report can indicate to the driver particular areas where they need to improve in order to become a safer driver. The report can help to specifically target specific areas for an individual person where they need improvement for example, economy, awareness, etc.

The report may indicate to a driver characteristics of their driving style where they are at fault, but where the driver was not aware that they were driving poorly/unsafely. For example, penalising a driver for driving unsafely in a "hot spot", such as accelerating harshly outside a school at the end of the school day may cause the driver to think more carefully. If a driver was unaware that they were making such mistakes, the report may cause the driver to reassess their driving habits, and the route that they take. The penalties associated with unsafe driving may further impress the need for the driver to improve their safety when driving in an unsafe fashion at certain times and in certain places.

In one embodiment, the driver profile and/or report/feedback that is provided to the user may be represented graphically for any, some, or all of, the parameters. For example, data may be represented as a bar chart, a line graph, a scatter graph or a pie chart for a parameter.

Data for a parameter can be recorded in a range or band of values so that it is easy for a user/driver to extract information from the data. The data may be represented in the form of a bar chart, where each bar represents a range of values (for example 0 to 30 miles per hour for the speed parameter) in a convenient way for the data to be viewed. In this way data in relation to known problem areas, for example driving faster than the national speed limit or having entries for an RPM that produces a lot of pollution, can easily be extracted.

A driver may be rewarded or penalised depending on the number of data entries within certain problematic ranges. For example in Great Britain where the highest national speed limit is 70 miles per hour, a user may be penalised for any entries in a speed range above 70 miles per hour. Similarly it may be that an RPM of greater than a threshold value may cause unacceptable emissions to be produced by the engine, and the driver may be punished accordingly if there are any entries for a range that is known as problematic. The threshold, and identified problematic ranges, that are deemed unacceptable may be different for different engines, different cars, in different countries/jurisdictions and exceeding that threshold or driving within a problematic range may cause the driver to be penalised.

In some embodiments the average value of a parameter may be taken into account when producing the feedback to determine how safely, how economically, and with how much pollution, a vehicle is driven. The average value of the parameter may be taken in conjunction with the data represented by the graph such that a computer software algorithm can determine whether the driving is considered safe and/or economical and/or with a reasonable amount of pollution.

In some embodiments a driver profile that has been determined from parameters obtained by the engine management system can be used to verify a theoretical psychometric profile associated with the driver. This provides the advantage that the theoretical psychometric profile can be compared with real, physical performance data and can be adjusted accordingly such that the psychometric profile is more accurate/up-to-date. In some embodiments a theoretical psychometric profile may not be required at all because the necessary data can be obtained from the vehicle that the driver is driving. In some embodiments the theoretical psychometric profile may be verified in real-time.

In embodiments where data is monitored/verified in real-time, this may mean that the profile is monitored/verified substantially as the driver drives, for example at regular intervals during a journey, or at the end of a journey, possibly at the end of every journey, such that a driver's most recent driving qualities are incorporated into the profile. This can help to ensure that the driver profile gives an accurate up-to-date impression of how the driver is driving.

A journey may be considered to be the route taken starting from when an engine is turned on, and ending when the engine is turned off. In other embodiments, short intervals with the engine turned off, for example when filling up with fuel, may not constitute the end of a journey. There may be a maximum amount of time that can elapse with the engine turned off without constituting the end of a journey. Alternatively, a driver/user may indicate the start and end points of a journey, for example by pressing a button in the vehicle. In some embodiments one journey may be automatically terminated, and another journey started, if a different driver starts driving the vehicle.

In some embodiments the engine management system may, directly or indirectly, transmit data from the vehicle to a remote location such that the driver profile can be determined at the remote location from the transmitted data.

All new vehicles sold in the European Community are fitted with onboard devices for monitoring the status and performance of the engine. These were introduced in order to monitor emissions related to vehicles with a view to reducing harmful emissions. These monitors are accessed through a standard interface known as the European On Board Diagnostics Interface (EOBD). Other data is often available from the same connector and using the same protocols. There is also an American equivalent onboard diagnostics standard, identified by the abbreviation OBD.

A fault diagnostics system may generate data from sensors throughout the vehicle, for example; speed, distance, tachometer data, fuel consumption data, and electrical fault data. Sensor values outside of an acceptable range trigger a Diagnostic Trouble Code (DTC). These DTCs are generated and can be used to illuminate warning lamps or displays on the vehicle's dashboard and are also stored for download by technicians when the vehicle is serviced.

The EOBD system and/or fault diagnostics system may be linked to a wireless transmitter such that information generated by these systems can be analysed at a remote location, possibly in real-time.

In some embodiments, the information derived from the fault diagnostics system may be used to generate the driver profile. For example if a fault has been showing on a driver's dashboard (or has been indicated to the driver in another way) and he has been ignoring it, the driver may be penalised. Ignoring warning lights may be unsafe and cause damage to the vehicle, for example by continuing to drive without topping up the oil when the oil warning light is on.

The vehicle may communicate with the remote location by GSM, WI-FI, Bluetooth, SMS or by any other suitable means.

In some embodiments a transmitter may be plugged into an EOBD port that is already present in the vehicle to enable the data to be transmitted from the vehicle. In other embodiments the vehicle may have an in-built computer processor that can monitor the data produced by the engine management system and transmit the report to the driver directly in the vehicle without the use of a remote computer processor. In some embodiments a processor at a remote location may still be used to perform some, or all, of the processing before reporting to the driver in the vehicle.

A further consideration is that erratic, unsafe driving can damage roads. Therefore, encouraging people to drive in a safer, less erratic, fashion can help maintain the roads in a better condition.

In addition to the above parameters, a memory device may be associated with a seatbelt that can provide information about the forces experienced by the seatbelt. Such a memory may be called a "seatbelt memory". Data obtained by the seatbelt memory may also be used to determine how safely a vehicle is being driven. Large forces on the seatbelt may indicate that a driver is driving erratically, and decelerating harshly, because their body is exerting forces on the seatbelt during these manoeuvres. A driver may be penalised if the seatbelt memory indicates that they are driving harshly and unsafely. Furthermore, the seatbelt memory may indicate whether or not a driver is wearing their seatbelt and may penalise a driver for not wearing their seatbelt as it is unsafe to do so.

According to a further aspect of the invention there is provided apparatus for training a driver of a vehicle, the apparatus comprising:
a vehicle positioning device for monitoring the location of a vehicle;
a device for monitoring parameters associated with the vehicle; a processor for generating a driver profile that indicates the driving style of the driver based upon the location of the vehicle and the parameters associated with the vehicle whilst it is being driven; and
means for providing feedback to the driver using the driver profile.

According to another aspect of the invention, there is provided a method of evaluating how much pollution is produced by a vehicle while it is being driven by a driver, comprising:
monitoring parameters associated with the vehicle whilst it is being driven by the driver;
generating a driver profile that indicates the driving style of the driver based upon the parameters associated with the vehicle whilst it is being driven; and
generating a pollution profile using the driver profile.

In some embodiments, the method of evaluating how much pollution is produced by a vehicle may not require the feature of monitoring the location of the vehicle. The location of the vehicle is not directly related to how much pollution is produced, and therefore this is not an essential requirement for this aspect of the invention.

In other embodiments the method may further comprise monitoring the location of the vehicle whilst it is being driven by the driver. This may be useful in areas which have a congestion charge, for example in a big city like London. In such areas, drivers of low emission producing vehicles may be rewarded, for example by a reduced or waived congestion charge.

Using driving style to generate a pollution profile can improve on the data provided by standard CO² emission tables, as miles per gallon (mpg) and actual fuel usage can provide more accurate information on how much pollution is really being produced.

In some embodiments the driving style/driver profile information can include data obtained by an exhaust gas sensor, for example an exhaust gas oxygen sensor or lambda sensor, such that information relating to how much raw fuel is being exhausted by the engine can be determined.

The pollution profile is generated using information about the driving style of the driver, and therefore gives a more realistic, and more accurate, indication of how much pollution is being produced. The driving style can use parameters such as engine RPM, or any of the parameters discussed above, which can provide a link to how much pollution is really being produced.

In some embodiments the pollution profile and/or CO² emissions can be used to calculate the actual usage of the vehicle accurately, such that a driver can be rewarded or penalised based on how much they use their vehicle.

Using the driving style to evaluate how much pollution is produced by a vehicle can provide a more detailed analysis of how much pollution is being produced, as opposed to monitoring where and when a vehicle is driven as is known from the prior art.

Computer software may be arranged to not only calculate the amount of pollution that has really been produced by the vehicle (as opposed to theoretical values generated by manufacturers in test conditions), but also to predict a typical further amount of pollution that will be produced by the vehicle in a given time-frame, for example the next month. This prediction may be calculated using historical values of how a driver has driven in the past, for example using data representing how aggressively they rev their car, etc. In this way a driver may be rewarded for driving in an economical fashion as they will have a predicted pollution production that will also be low for future journeys.

According to another aspect of the invention, there is provided a method of producing a psychometric profile of a driver, the method comprising:
monitoring the location of the vehicle whilst it is being driven by the driver;
monitoring parameters associated with the vehicle whilst it is being driven by the driver;
generating a psychometric profile of the driver based upon the location of the vehicle and the parameters associated with the vehicle whilst it is being driven.

It will be appreciated that all optional features relating to one aspect of the invention, are also optional for other aspects of the invention.

Embodiments of the invention will now be described in detail, by way of example only, and with reference to the accompanying drawings, of which:
**Figure 1** shows schematically a system for training a driver according to an embodiment of the present invention;
**Figure 2** shows schematically a route taken during a journey according to an embodiment of the present invention;
**Figure 3** shows a web page indicating journeys that have been driven according to an embodiment of the present invention;
**Figure 4** shows a web page indicating part of a driver profile according to an embodiment of the present invention;
**Figures 5 to 13** show graphical representations of data that can be used as part of a driver profile according to an embodiment of the present invention;
**Figure 14** shows a report according to an embodiment of the present invention;
**Figure 15** shows a web page for personalizing a report according to an embodiment of the present invention;
**Figure 16** shows schematically a system for monitoring how much pollution is produced by a vehicle according to another embodiment of the present invention; and
**Figure 17** shows a pollution profile according to an embodiment of the present invention.

The present invention relates to a method and system for training the driver of a vehicle. The driver may be rewarded or penalised for driving well, economically, safely, within the law, in a way that minimises harmful emissions, etc.

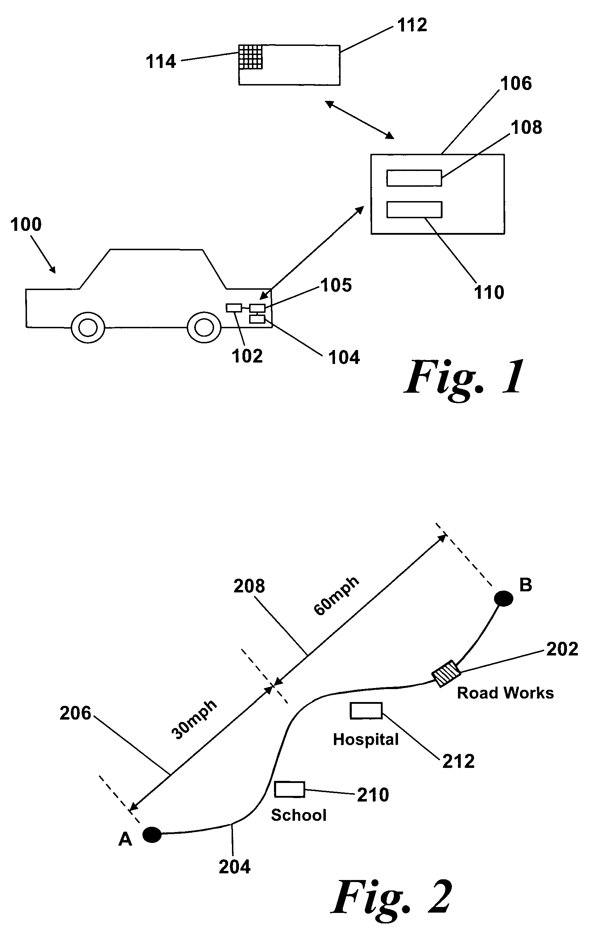

Figure 1 shows a system for training a driver according to an embodiment of the present invention. A car 100 is fitted with a Global Positioning System (GPS) 102 and a vehicle diagnostics system 104.

The GPS 102 is arranged to monitor the geographical location of the car 100, such that the route that the car 100 is driven can be mapped. The vehicle diagnostics system 104 is arranged to monitor physical parameters associated with the car 100, particularly associated with the engine and engine management system.

As the car 100 is driven, the vehicle diagnostics system 104 monitors parameters associated with the car 100 and this data is correlated with the data returned by the GPS 102 such that the location at which specific readings for the parameters were recorded can be determined. A transmitter 105 within the car 100 is arranged to wirelessly transmit the data retrieved by the vehicle diagnostics system and the GPS data to a remote computer 106 so that the data can be processed. In this embodiment the data is transmitted in real-time as it is recorded. The data is transmitted via GSM, although in other embodiments it may be transmitted by WI-FI, Bluetooth, SMS or by any other suitable means.

The remote computer 106 comprises a computer processor 108 and computer memory 110. The computer processor 108 performs algorithms on the data relating to the location of the car 100 and the parameters that have been monitored by the vehicle diagnostics system 104 to determine a driver profile that indicates the driving style with which the car has been driven. Examples of a driving style can include, but are not limited to, safe, unsafe, dangerous, erratic, steady, legal, illegal, economic, uneconomic, high or low pollution producing, aware, unaware, accelerating hard, braking fast, or any combination of the above.

In other embodiments the style with which a vehicle is driven may be identified by scores attributed to one, or a number of, categories. In further embodiments still, the driver style may be represented by graphical representations of data obtained from the vehicle 100.

The computer processor 108 can store the driver profile in computer memory 110. The driver can then access computer memory 110 using the Internet (or any other means) to inspect the driver profile to obtain feedback on how they have driven the car 100. The feedback can be used as a training aid to improve the quality of a driver's driving skills, and also as a safety device by highlighting to a driver characteristics of their driving where they are unsafe, uneconomical or produce a lot of pollution.

In some embodiments the feedback to the driver can be used to reward or penalise the driver based on the quality of their driver profile, and this can further improve the safety and quality with which a driver drives. The rewards may be used to encourage a driver to drive more safely and to a higher standard in the future. In this embodiment the rewards are high scores in a report, as discussed below.

In other embodiments the reward for good driving may be a cash prize, a voucher for spending in a store/restaurant, a holiday, a reduction in a driver's insurance premium, a gift item, praise and/or recognition of the driver's abilities for example, a league table of drivers may be published, etc. A penalty for bad driving may be anything detrimental to the driver, for example, recognition of the bad driving by a low placing in a league table of drivers, withholding a reward mentioned above, increasing an insurance premium, etc. The league table of drivers may be considered by an employer when selecting which of a number of employed drivers should be selected to drive a journey.

In some embodiments the remote computer 106 may access a further computer memory 112 to determine characteristics of the route that the driver has taken. Characteristics of the route may be stored centrally on a single computer memory in order to avoid having to update a number of different computer memories each time a dynamic characteristic of the route changes, for example road works are started or finished.

The memory 112 may include a database 114 that provides physical features that are associated with certain roads, portions of roads or geographical coordinates. For example, the location of prevailing road speed conditions and speed limits that are in force on roads, congestion levels, buildings/amenities that require special attention (for example schools, hospitals, etc.), road works, weather conditions, accidents, closed roads, temporary speed limits, special events, etc. may be stored in database 114.

In the UK, data identifying the speed limits on roads is published by the Government, but held separately by each of the regional Department for Environment, Food and Rural Affairs (DEFRA) agencies, or highways authorities.

In other embodiments, the physical features associated with certain roads may be stored in the computer memory 110 of remote computer 106, or in an in-built memory within the car 100, and a separate memory 112 is therefore not necessary.

In other embodiments, the data may be transmitted to the remote computer 106 periodically, for example at the end of each journey, daily, weekly, monthly, quarterly, at the end of the calendar year, at the end of the fiscal year, etc.

In further embodiments still, the data may be transmitted when the car 100 is in a specific location, for example near a receiver arranged to receive the information.

In some embodiments, the data may be stored in local memory within the car 100, and all subsequent processing of the data is performed within the car 100.

Figure 2 shows schematically an example of a route 204 that has been generated from the GPS co-ordinates returned from a car whilst being driven from A to B according to an embodiment of the present invention. The GPS co-ordinates have been used in conjunction with information stored in computer memory (for example database 114 in Figure 1) to determine characteristics of the route 204. It will be appreciated that the route need not necessarily be generated graphically, and that it may be encoded in computer memory.

The characteristics of the determined route show that two different speed limits are in force between A and B. The speed limit is 30mph in region 206, and the speed limit is 60mph in region 208. Data returned from the vehicle diagnostics system can be analysed in combination with the information about the known speed limits between A and B to determine whether or not the driver is exceeding the speed limit at any time during the journey.

The information stored in computer memory also indicates that the route 204 passes a school 210 and a hospital 212. Schools, hospitals and the like may be considered as "hot-spots" as they require particular attention by the driver when passing them. The driving style of the driver can be determined in the vicinity of these buildings to determine how mindful the driver was as they were passing these buildings. For example, if the driver slowed down as they passed these buildings, and did not accelerate or decelerate sharply, this may indicate that the driver was aware of his surroundings and was driving accordingly. A driver may be rewarded for such driving.

In some embodiments the time of day may be taken into account when considering how safely a driver passes a hot spot. A driver may not be expected to slow down and drive particularly cautiously past a school if the school is closed, for example if it is during school holidays or after the end of the school day.

Computer memory may also be capable of indicating temporary/dynamic features that are present on a route 204, for example road works 202. In this example road works 202 are present in between the hospital 212 and B, and there is a temporary speed limit of 30mph in the vicinity of the road works 202. This temporary speed limit may override the national speed limit that is otherwise in force on the road. Again, the care and speed with which a driver passes road works 202 can be considered when analysing how well a driver is driving.

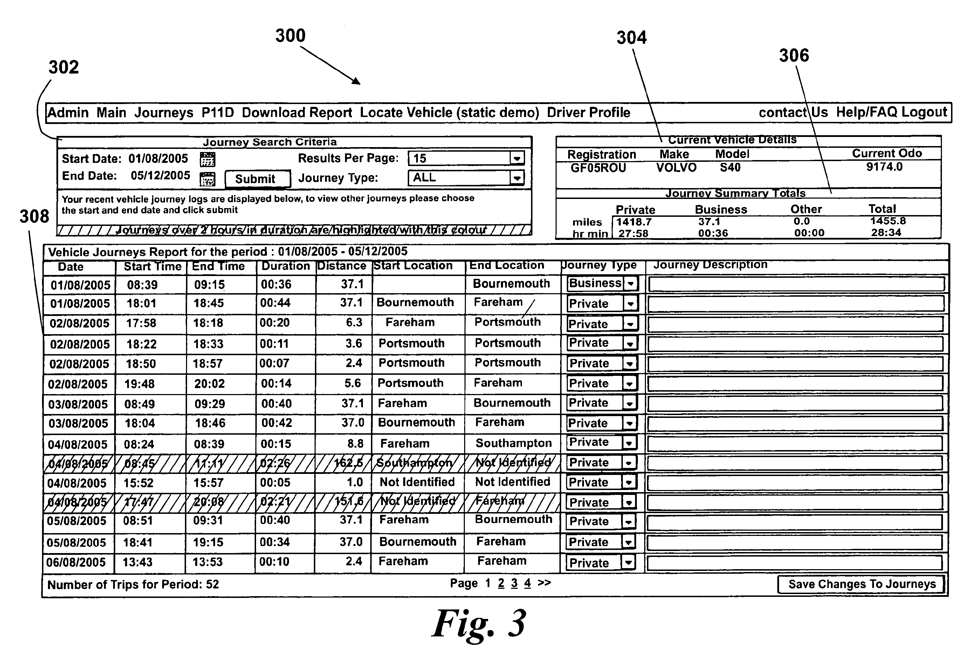

Figure 3 shows details relating to the journeys that a driver has taken in the form of a web page 300 in accordance with an embodiment of the present invention. The web page is an example of part of the feedback that is available to the driver as part of the driver profile.

The web page has a journey search criteria section 302 that enables a user to select a date range of journeys to be displayed. It is also possible to select the journey type to be searched (for example business, private, or other), and how many results are displayed per page.

The current vehicle details are indicated in section 304, and a summary of the total time and distance for business, private and other purposes is illustrated in section 306.

Section 308 shows a vehicle journey report for the specified period. Each row represents a journey, and includes the date, start time, end time, duration, distance, start location, end location, journey type and an optional journey description. The values for the date, start and end time, duration and distance are filled in automatically by the data returned from the vehicle diagnostics system and GPS within the car. The start and end locations are a guide only, and may be obtained from the subscriber trunk dialling (STD) code of the nearest or strongest signal emitted from a telecommunications mobile cell mast. In borderline areas, the location may register to a neighbouring STD code. Information relating to the journey type and the optional journey description may be inserted manually by a user.

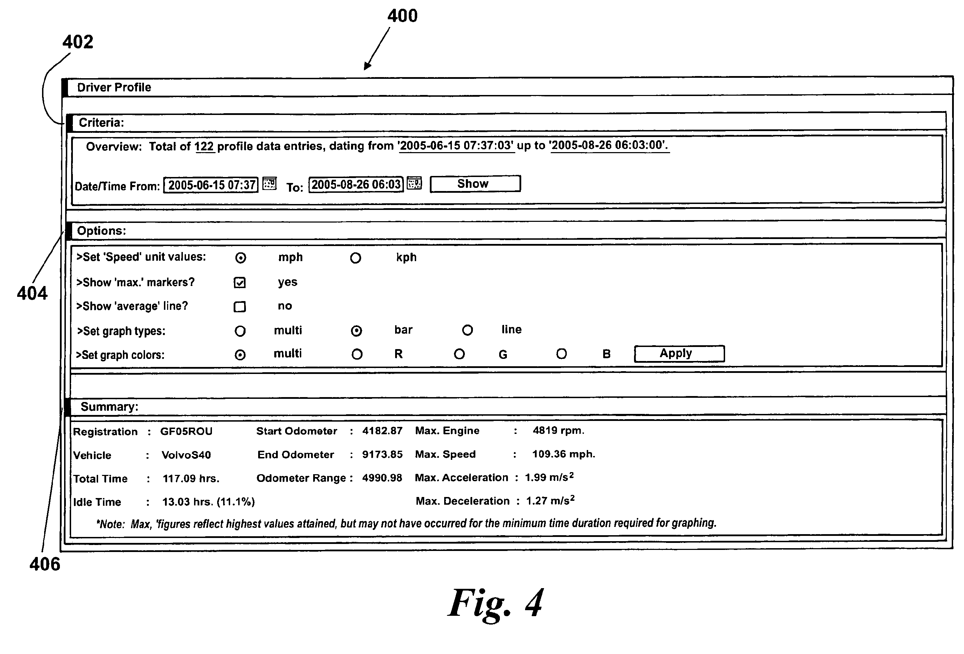

Figure 4 shows a graphical user interface on a web page 400 that displays search criteria 402, options 404 and a summary 406 of a driver profile according to an embodiment of the present invention.

The search criteria box 402 can enable a user to select a date and a time range of journeys to be considered for determining a driver profile. This can enable a driver's profile to be determined for a specified selection of journeys and can be tailored for individual needs. The selection of journeys may be just one journey. This can allow any changes in the driver's profile over time to be easily monitored. In some embodiments, search criteria may not be available to the user, and a default time range is automatically selected for the user by computer software.

A user can set a number of options by selecting or deselecting icons in the options box 404. Example of options that can be set are: the units that are used to measure speed; showing maximum markers for parameters in the profile (for example the maximum speed); showing an average line in a driver profile graph; setting the type of graph; and setting the colour of the graphs. In other embodiments, some, all, or none, of the above options may be available.

The summary section 406 of the web page 400 indicates a number of readings associated with the car. Some of the readings are static and will not change over time, for example, registration and vehicle. Other readings are associated with the time range selected in the search criteria box 402 and are dynamic, for example, total time, max. speed etc. In some embodiments the "max." figures reflect the highest values attained, but may not have occurred for the minimum time duration required for graphing.

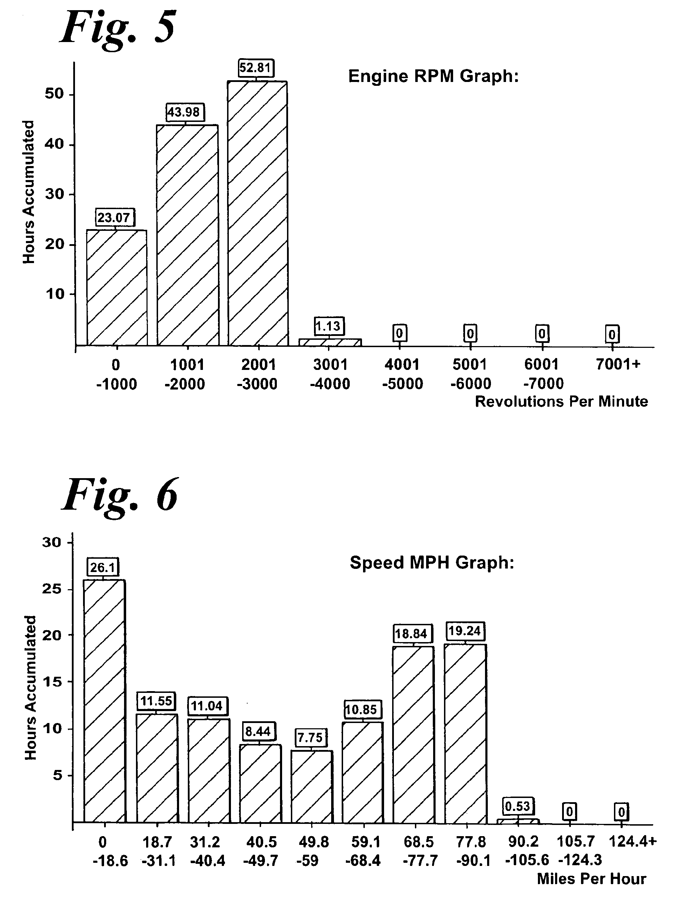

Figures 5 to 13 show examples of parameters that have been recorded. One, some, or all, of the parameters may form part of the driver profile.

### Revolutions Per Minute

Data relating to engine revolutions per minute (RPM) is shown in Figure 5. The engine RPM can be monitored to determine how aggressively a driver is driving, and how much pollution the vehicle is generating. High revolutions per minute will generate more CO₂ and other pollutants in the exhaust fumes. A driver may be penalised for driving with high revolutions per minute. High values for RPM may also indicate that the driver is accelerating quickly as they are revving the engine harshly before changing up a gear, and this may be deemed unsafe or uneconomical.

### Speed

The speed at which a vehicle is driven is shown in Figure 6, and can also indicate how safely the vehicle is driven. This may be particularly useful when used with a global positioning system (GPS) which can determine where geographically a vehicle is being driven, and at what speed. For example the speed at which a driver is driving can be compared with the national speed limit that is in force on that road. Exceeding the speed limit may cause the driver to be penalised.

Furthermore, the speed at which a vehicle is being driven can be compared with certain buildings/amenities/facilities, possibly at certain times, to determine whether or not the vehicle is being driven safely given outside influences. For example, a driver may be penalised for driving quickly outside a school at the end of the school day. In such an example the time at which the vehicle is driven past the school can determine how safely the vehicle is being driven in specific circumstances.

### Distance

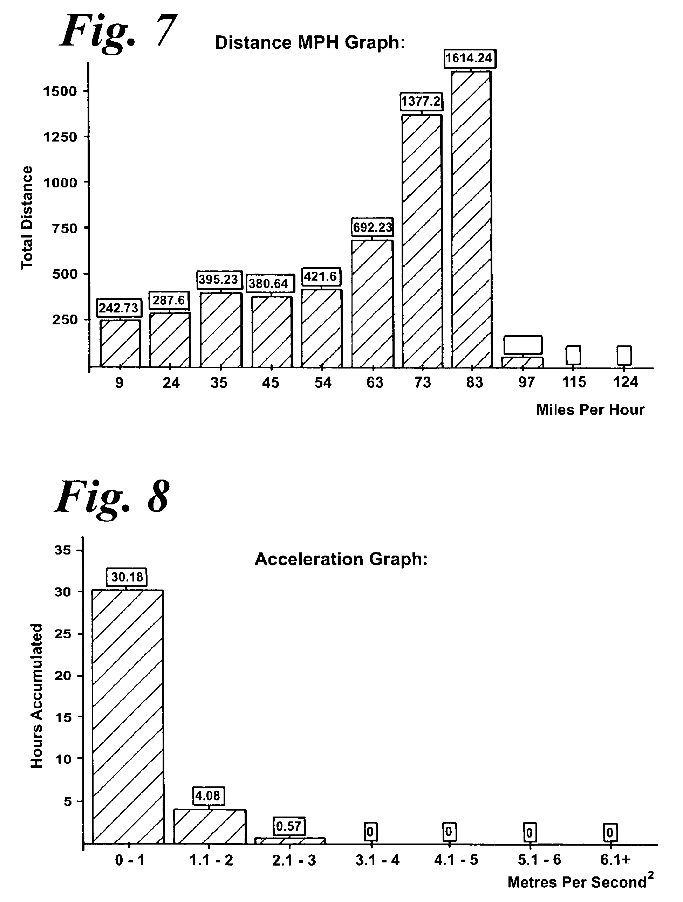

Figure 7 shows the total distances that a vehicle has been driven in certain speed ranges. Statistically it is more likely that a driver will have an accident if they drive long distances, and more likely still to have an accident if they drive long distances at certain speeds or in higher risk bands. Therefore, a driver may be rewarded for not driving long distances. They may also be penalised if they drive long distances in a given time frame, or at certain speeds. For example a driver may be penalised for driving a total of 12,000 miles per year, or perhaps 15,000 miles per year for a person who earns their living from their, car such as a company representative, as statistically this makes them more likely to have an accident. Other threshold values of distance driven may be considered for individual speed ranges. For example, as an indication of the amount of motorway driving that a driver does.

Encouraging a driver to drive fewer miles can help increase the safety of that driver, and the safety on the roads as a whole.

### Acceleration

The acceleration of a vehicle is illustrated in Figure 8 and can be directly linked to the amount of pollution that the vehicle produces. A fast acceleration, typically with correspondingly high RPM, will use the engine inefficiently and can cause greater pollutants to be present in the exhaust of the vehicle as there will be a lot of un-burnt fuel. A user may be penalised for the amount of emissions that their vehicle actually produces and how efficiently their driving style causes fuel to be burnt by the engine, rather than the theoretical values produced by a manufacturer in test conditions that are measured for a vehicle being driven in a certain way. Furthermore, a fast acceleration can indicate aggressive, uneconomical, and unsafe, driving as the driver will have less time to react to changing circumstances, and a driver may also be penalised for this.

### Deceleration

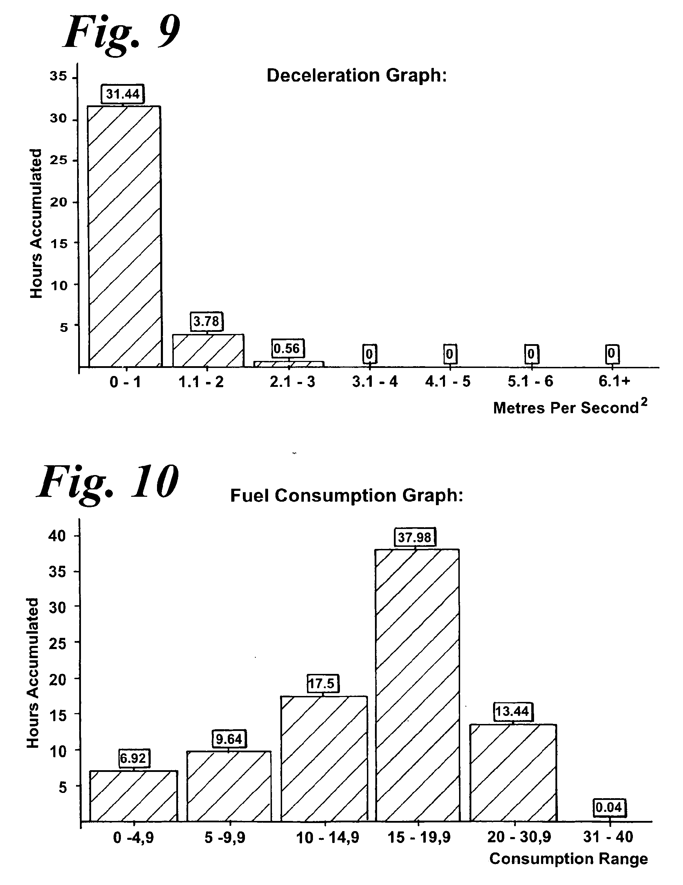

The rate at which a driver decelerates can have similar repercussions as the rate at which a driver accelerates. An example graph showing the deceleration that a vehicle experiences is shown as Figure 9. Rapid deceleration can indicate an erratic, unsafe, driver who may be more likely to have an accident than a driver with a lower deceleration. A low deceleration can indicate that a driver is thinking ahead, driving considerately, and giving himself more time to react to an incident in front of them.

### Fuel Consumption

The fuel consumption of a vehicle's engine can indicate how smoothly a vehicle is being driven and can provide a direct link to how economically a vehicle is being driven. A low fuel consumption can indicate that the vehicle is being driven smoothly and that the driver is not accelerating or decelerating harshly. Low fuel consumption can therefore be an indicator that the vehicle is being driven considerately and safely. Furthermore, low fuel consumption can cause a driver to be rewarded because they are driving their vehicle in a more economical manner.

### Throttle Position

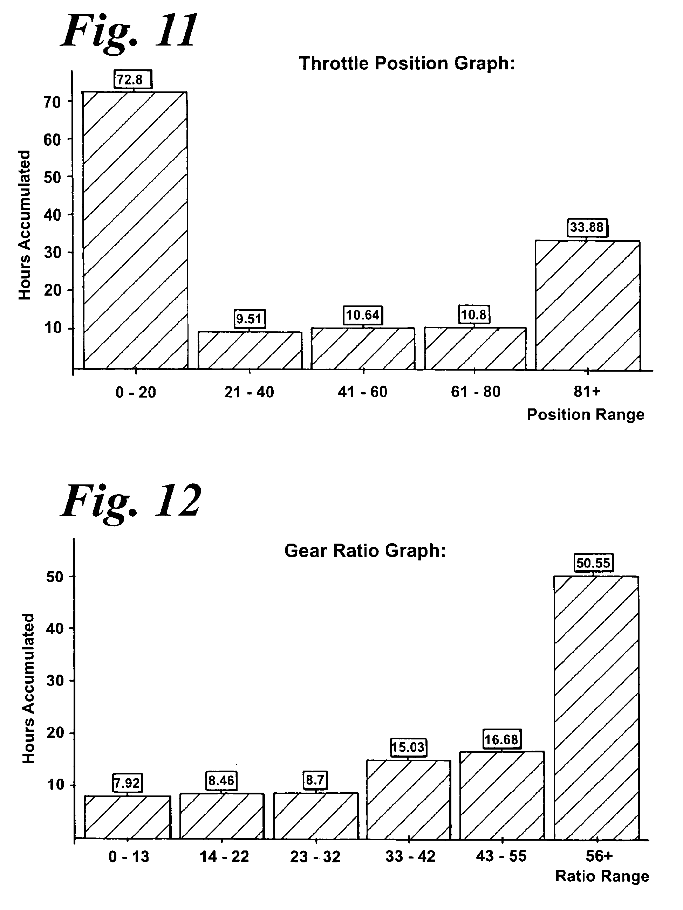

The position of the throttle is shown in Figure 11, and may be monitored by the engine management system. The position of the throttle can be a direct link to the aggressiveness with which a driver is driving a vehicle. If a driver uses their vehicle with the throttle mainly in a fully depressed position, as opposed to accelerating steadily and increasing the pressure on the throttle steadily, this can indicate that the driver is driving aggressively and therefore unsafely. In some embodiments, even if the actual value of the acceleration and the speed of the vehicle is not very high the fact that the throttle is depressed fully can indicate that the driver is aggressive in their driving style, and therefore can be penalised accordingly. A driver that depresses the throttle fully can indicate that the driver has an aggressive mindset, and may be driving unsafely. Similar measurements may be taken of the position of the brake and clutch pedals in order to better define the driving style with which a vehicle is being driven.

### Gear Ratio

Figure 12 shows the time spent driving in gears with certain gear ratios. This parameter can give a general indication of the type of driving being performed. For example, all low gears could indicate a lot of town driving, and all high gears could indicate a lot of motorway driving. Furthermore, the gear ratio parameter can identify drivers who miss out gears or who slip gear a lot. Drivers who use the wrong gear and cause the engine to run inefficiently, for example changing from first gear to fourth gear through the gate, or starting off with a heavy load in second gear, may be penalised accordingly.

The ratio range indicated on the horizontal axis of the graph is the ratio of the engine revolution speed to the speed of the vehicle. The gear ratio is revolutions per minute divided by miles per hour (RPM/MPH).

### Idle Ratio

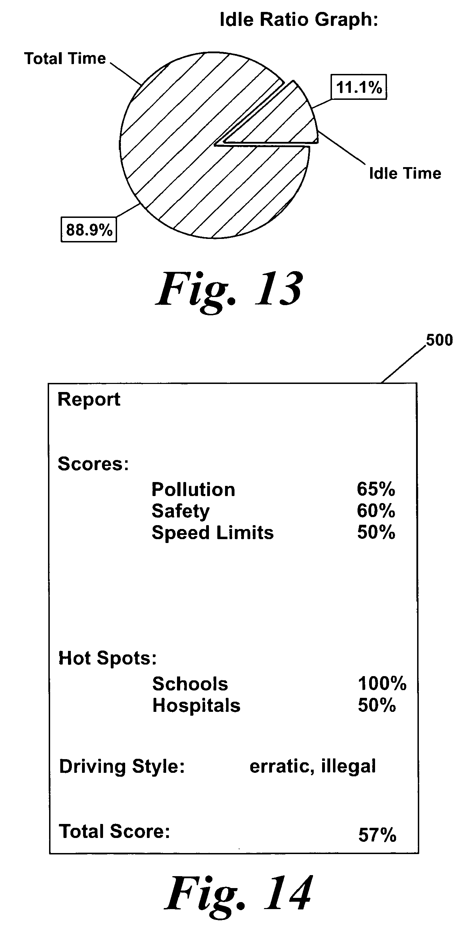

The idle ratio is shown as Figure 13 as a pie chart. The idle ratio indicates the proportion of a driver's journey(s) that the vehicle is stationary to that at which the vehicle is moving. If a driver is stationary for a large proportion their time in their vehicle this can indicate that they have chosen a busy route that has a lot of traffic. A driver may be penalised for having a large proportion of idle time as they are producing emissions without actually going anywhere or gaining any benefit from being in their car. Performing a journey with a lot of idle/stationary time creates more pollution than performing a journey with only a little idle/stationary time.

Also, the idle ratio can indicate that a driver is sitting in their vehicle with the engine running for long periods of time. This may be to waste time, for example while waiting for something/someone, or to keep warm when they are cold. A driver may be penalised for using their car in this way as it is inefficient and produces unnecessary emissions and pollution.

It will be appreciated that the graphs shown in Figures 5 to 13 are illustrative only, and can take any known graphical form, for example line, bar, pie-chart, scatter graph, etc. In some embodiments the data may not be graphically displayed at all, and the data can be simply manipulated by computer software to generate feedback that can be provided to the driver. An example of feedback in the form of a report is discussed below.

Figure 14 shows a report 500 according to an embodiment of the present invention that can be used to provide feedback to a driver about their driving style. The report 500 is fed back to the driver and is generated using a driver profile as discussed above. The report 500 includes a number of scores for particular categories and scenarios, an indication of the driving style of the driver, and a total score at the bottom of the report 500. A driver may be further rewarded or penalised for particularly high or low scores in any of the individual categories, and/or a high or low total score.

The scores can be calculated by a computer algorithm that uses one, some, or all, of the parameters as discussed in relation to Figures 5 to 13.

For example high values for the engine RPM may contribute to an erratic driving style and in turn a low score for safety, and the data in relation to speed may provide an indication that some speed limits have been broken thereby contributing to a driving style of illegal.

It will be appreciated that any of the parameters discussed above can contribute to the driving style, and that Figure 14 is an example of one of a great many ways that the data may be fed back to the driver. Indeed, in one embodiment, the information shown in any of Figures 3 to 13 that form part of the driver profile may be fed back as a report to the driver as they are, and no further computer algorithm is required to translate the driver profile into the report. The driver profile is the report.

It will be appreciated that the report for any of the embodiments of the invention may take the form of an audio report produced by a speaker; a visual display on an electronic screen, for example an in-built screen in the car 700, the driver's mobile phone, BlackBerry, PDA, lap-top computer etc.; a web page; a computer file accessible over the internet; a printed document, which may be posted to the driver; an email; a computer file; any combination of the above; or any other means.

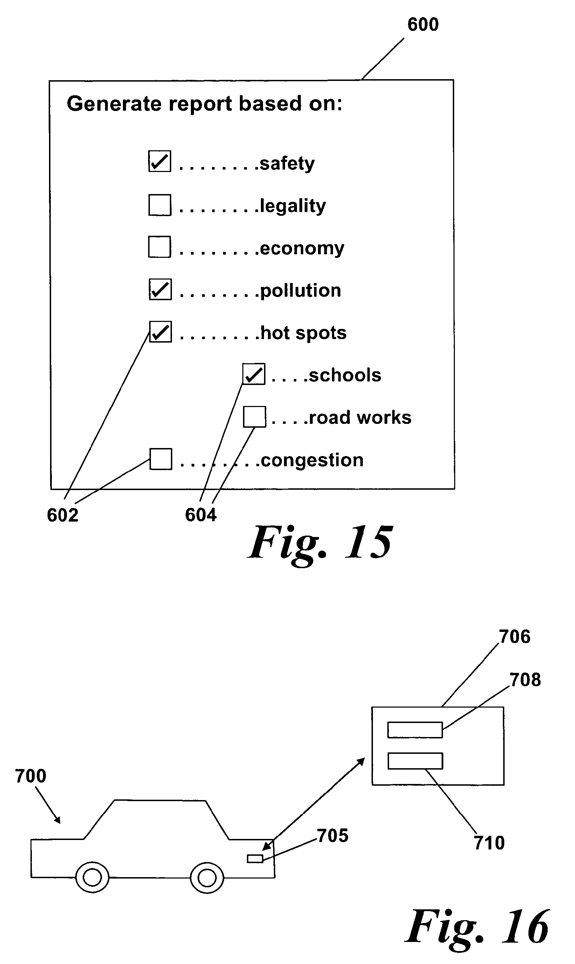

Figure 15 shows a web page according to an embodiment of the present invention that can be used to select which of a number of characteristics are used when generating a driver profile/report to feedback to a driver. A user therefore has the option of deciding which of the characteristics are important in a given scenario and tailoring the report to those characteristics.

In the example of Figure 15, there are five characteristics from which the user can choose, and these are: safety; economy; pollution; "hot spots"; and congestion. Each of the five characteristics have a tick box 602 associated with them in order that a user can indicate that the characteristic should be used by clicking a mouse (or otherwise indicating to the computer) in the box 602. In this embodiment a tick has been placed in the box for safety, pollution and "hot spots". Further, in this embodiment, the characteristic "hot spots" has two sub-characteristics: schools and road works with associated tick boxes 604. The sub-characteristics enable a user to further refine how the report is generated. It will be appreciated that any of the other characteristics may also have sub-characteristics that can be expanded to provide more detail where required.

The embodiment shown in Figure 15 provides a fine granularity when considering how the driver profile should be considered, so that a user can modify the profile/report to their individual needs.

Figure 16 shows a system for monitoring how much pollution is produced by a vehicle according to an embodiment of the present invention. The system comprises a car 700 and a remote computer 706. This system is particularly concerned with generating a pollution profile that indicates how much pollution is produced for one or more journeys, and may be used to reward or penalise a driver based upon how much pollution is produced while they are driving. This system can be used to encourage drivers to produce less pollution.

The car 700 comprises a transmitter 705 that is arranged to transmit data recorded by the engine management system (or any other data retrieval device) to the remote computer 706. In this embodiment there is no GPS associated with the car 700, as the position of the car 700 does not directly influence the amount of pollution that is produced. In other embodiments a position determining system may be associated with the car 700.

The transmitter 705 transmits data relating to one, some, or all, of the parameters discussed in relation to Figures 5 to 13 to the remote computer 706. The remote computer 706 then generates a driver profile indicating the driving style of the driver based upon the data recorded by the engine management system. The driver profile is then used to generate the pollution profile.

In some embodiments the processor 708 and/or memory 710 may be located within the car 700 itself, and it is not necessary for the transmitter 705 to transmit the data recorded by the engine management system to an off-car computer 606. It may also be possible in some embodiments for a processor within the car 700 to analyse the data and produce a report to the driver indicating how much pollution the car 700 is producing while they are driving. The report may be available to the driver in real-time as they are driving so that they have the opportunity to improve their driving in real-time. In other embodiments the report may be available at the end of a journey or periodically, for example every week, month, year, or at any other time. In some embodiments the report may be available to the user on demand.

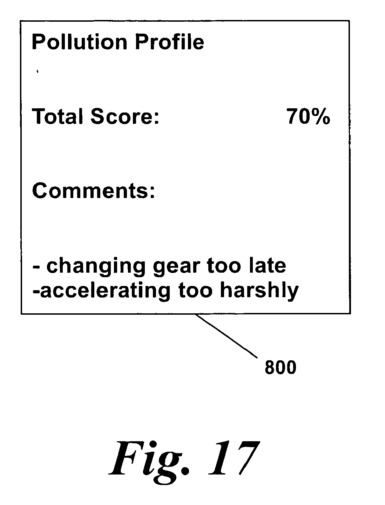

Figure 17 shows a pollution profile 800 according to an embodiment of the present invention. The pollution profile 800 is a report that gives a score as to how well the vehicle is being driven in relation to minimising pollution. In this case the score is 70%, although any other scoring mechanism may be used. The report also provides more constructive comments as to why a large amount of pollution is being produced, and what a driver can do to reduce the amount of pollution being produced. For example, the report may indicate that pollution is being generated because the driver is accelerating harshly, revving the engine a lot, using the wrong gear, driving too quickly, etc.

It will be appreciated that a pollution profile may also be generated as part of the feedback for any of the earlier embodiments of the invention.

In some embodiments only one driver may be allowed to drive a certain vehicle, for example, only one person may be insured for the vehicle. Therefore data returned by a vehicle can be associated with the only driver that is allowed to drive that vehicle.

In other embodiments more than one person may be insured to drive the same vehicle, and an identification means or device may be required to determine which person is driving the vehicle at a given time/for a given journey, and therefore with whom the recorded data should be associated.

The identification means may be a magnetic identification key, for example a dallas key, that can be placed adjacent to a reader when a new driver starts to drive the vehicle. Alternatively, a driver may identify themselves to the system at the start of each journey, or each time the engine is started. The driver may also identify themselves at the end of each journey.

In other embodiments, a smart card in combination with a smart card reader may be used to identify the driver.

The driver identification can be very useful to ensure that the correct driver is rewarded or penalised. In embodiments where a driver may be penalised/disciplined for breaking the law, for example by exceeding a speed limit, it may be particularly important that the correct driver can be identified.

## Claims

1. A method of training a driver of a vehicle comprising:
monitoring the location of the vehicle whilst it is being driven by the driver;
monitoring parameters associated with the vehicle whilst it is being driven by the driver;
generating a driver profile that indicates the driving style of the driver based upon the location of the vehicle and the parameters associated with the vehicle whilst it is being driven; and
providing feedback to the driver using the driver profile.

2. The method of claim 1 wherein the driver profile is used to reward or penalise a driver.

3. The method of claim 1 or claim 2 wherein the location of the vehicle and the style in which the vehicle is being driven are monitored in real-time.

4. The method of any one of claims 1 to 4 wherein monitoring the style in which the vehicle is being driven comprises monitoring at least one of:
i) the revolution speed of the engine;
ii) the speed of the vehicle;
iii) the acceleration of the vehicle;
iv) the deceleration of the vehicle;
v) the throttle position of the vehicle;
vi) the gear the vehicle is being driven in;
vii) the gear ratio the vehicle is being driven in;
viii) the idle ratio the vehicle is being driven in;
ix) the fuel consumption/usage of the vehicle;
x) miles per gallon (mpg);
xi) any faults associated with the vehicle; and
xii) any combination of i) to xi).

5. The method of any preceding claim wherein the feedback comprises a report including one or more scores based on the style of driving as a function of the location of the vehicle.

6. The method of any preceding claim wherein the feedback comprises a report including one or more scores based on the style of driving as a function of the driving conditions experienced by the vehicle at locations where the vehicle is driven.

7. The method of claim 6 wherein a database is accessed to provide information on the driving conditions present at locations where the vehicle is driven.

8. The method of any one of claims 5 to 7 wherein the report comprises one or more scores for how well the driver has driven.

9. The method of any one of claims 5 to 7, wherein the report is in a form chosen from:
i) a web page;
ii) a computer file accessible over the internet;
iii) a printed document;
iv) an email;
v) a display on a screen;
vi) a computer file;
vii) any combination of i) to vi).

10. The method of any one of claims 5 to 9 wherein the report is updated substantially in real time, or is produced periodically.

11. The method of any preceding claim wherein the parameters associated with the vehicle whilst it is being driven are obtained from an Onboard Diagnostics Interface (OBD).

12. The method of claim 11 wherein Diagnostic Trouble Codes (DTCs) produced by the OBD are used to generate the driver profile.

13. Apparatus for training a driver of a vehicle, the apparatus comprising:
a vehicle positioning device for monitoring the location of a vehicle;
a device for monitoring parameters associated with the vehicle;
a processor for generating a driver profile that indicates the driving style of the driver based upon the location of the vehicle and the parameters associated with the vehicle whilst it is being driven; and
means for providing feedback to the driver using the driver profile.

14. The apparatus of claim 13, wherein the processor is further arranged to output signals which in use generate or cause a reward or penalty for the driver based upon the driver profile.

15. The apparatus of claim 13 or claim 14, wherein the vehicle positioning device and the device for monitoring parameters are arranged to monitor data in real-time.

16. The apparatus of any of claims 13 to 15, wherein the device for recording the style of driving is adapted to record at least one of:
i) the revolution speed of the engine;
ii) the speed of the vehicle;
iii) the acceleration of the vehicle;
iv) the deceleration of the vehicle;
v) the throttle position of the vehicle;
vi) the gear the vehicle is being driven in;
vii) the gear ratio the vehicle is being driven in;
viii) the idle ratio the vehicle is being driven in
ix) the fuel consumption/usage of the vehicle;
x) miles per gallon (mpg);
xi) any faults associated with the vehicle; and
xii) any combination of i) to xi).

17. The apparatus of any one of claims 13 to 16, wherein the means for providing feedback generates signals which are used to produce a report including one or more scores based on the style of driving as a function of the location of the vehicle

18. The apparatus of any one of claims 13 to 17 wherein the means for providing feedback generates signals which are used to produce a report including one or more scores based on the style of driving as a function of the driving conditions experienced by the vehicle at locations where the vehicle is driven.

19. The apparatus of claim 18 wherein the processor is arranged to access a database to provide information on the driving conditions present at locations where the vehicle is driven.

20. The apparatus of any one of claims 17 to 19 wherein the report comprises one or more scores for how well the driver has driven

21. The apparatus of any one of claims 17 to 20, wherein means for providing feedback is adapted to generate the report in a form from the group:
i) a web page;
ii) a computer file accessible over the internet;
iii) a printed document;
iv) an email;
v) a display on a screen;
vi) a computer file;
vii) any combination of i) to vii).

22. The apparatus of any one of claims 17 to 21 wherein means for providing feedback is adjusted to update the report substantially in real time, or is adapted to produce the report periodically.

23. A method of evaluating how much pollution is produced by a vehicle while it is being driven by a driver, comprising:
monitoring parameters associated with the vehicle whilst it is being driven by the driver;
generating a driver profile that indicates the driving style of the driver based upon the parameters associated with the vehicle whilst it is being driven; and
generating a pollution profile using the driver profile.
